**Europäisches Patentamt**

**European Patent Office**

**Office européen des brevets**

(19)

(11) Veröffentlichungsnummer : **0 287 597 B1**

(12) **EUROPÄISCHE PATENTSCHRIFT**

(45) Veröffentlichungstag der Patentschrift :
**12.02.92 Patentblatt 92/07**

(51) Int. Cl.$^5$ : **B29C 45/78, G05D 23/19**

(21) Anmeldenummer : **87906557.1**

(22) Anmeldetag : **16.10.87**

(86) Internationale Anmeldenummer :
**PCT/AT87/00061**

(87) Internationale Veröffentlichungsnummer :
**WO 88/02688 21.04.88 Gazette 88/09**

(54) **VORRICHTUNG ZUM MESSEN UND REGELN DER TEMPERATUR IN SCHMELZEZUFÜHRUNGSLEITUNGEN ZUR HERSTELLUNG VON SPRITZGUSSTEILEN.**

(30) Priorität : **16.10.86 AT 2749/86**

(43) Veröffentlichungstag der Anmeldung :
**26.10.88 Patentblatt 88/43**

(45) Bekanntmachung des Hinweises auf die
Patenterteilung :
**12.02.92 Patentblatt 92/07**

(84) Benannte Vertragsstaaten :
**BE CH DE FR GB IT LI NL SE**

(56) Entgegenhaltungen :
**Plastics Engineering, Band 40, nr.4, April 1984 (Connecticut, US) E.A. Ruhl : "Streamlined mold changing : a key to profitability", Seiten 39-42, siehe Seite 42, linke Spalte, Absatz 2**

(56) Entgegenhaltungen :
**Kunststoffe, Band 70, nr.11, November 1980 (München,DE) O. Heuel : "Wirtshaftliche Beheizung von Spritzgiesswerkzeugen mit normalisierten Heiz- und Regelelementen", Seiten 746-750, siehe Seite 749,rechte Spalte, Zeile 27 - Seite 750, rechte Spalte,Zeile 4 Patent Abstracts of Japan, Band 9, nr 320 (P-413) (2043), 14 Dezember 1985 & JP,A, 60147803 ( TOSHIBA KIKAI K.K.) 3 August 1985 Plastverarbeiter, Band 37, nr 8 August 1986 ( Spreyer, DE ) "Schneller Werkzeugwechsel möglich", Seiten 56-57, siehe Absatz "Multikupplungen", Figur 3**

(73) Patentinhaber : **Stastny, Erich
Parkstrasse 9
A-2521 Trumau (AT)**

(72) Erfinder : **Stastny, Erich
Parkstrasse 9
A-2521 Trumau (AT)**

(74) Vertreter : **Brauneiss, Leo et al
Patentanwälte Dipl.-Ing. Leo Brauneiss,
Dipl.-Ing. Dr. Helmut Wildhack Landstrasser
Hauptstrasse 50 Postfach 281
A-1031 Wien (AT)**

EP 0 287 597 B1

**Beschreibung**

Die Erfindung betrifft eine Vorrichtung zur Herstellung von Spritzgußteilen, mit einer Form, die Schmelzezuführungsleitungen, wie Kanäle, Düsen od.dgl., aufweist, welche mit Heiz- und/oder Kühleinrichtungen und mit Temperaturmeßeinrichtungen versehen sind, welche Einrichtungen über Regeleinrichtungen zur Steuerung dieser Einrichtungen in Verbindung stehen. Die Spritzgußteile bestehen vorzugsweise aus Kunststoff, können aber auch aus spritzgußfähigen Metallen hergestellt sein.

Solch eine Vorrichtung ist z. B. aus der Zeitschrifft Kunstsoffe, Band 70, N°11, November 1980, O. Heuel:"Wirtschaftliche Beheizung von Spritzgießwerkzeugen mit normalisierten Heiz-und Regelelementen" Seiten 746-750, bekannt.

Es ist bereits bekannt, Spritzgußteile durch einen kontinuierlichen Spritzgußvorgang herzustellen, bei dem eine rasche Arbeitsweise gewährleistet ist und das Entstehen von Angußteilen, welche bei einer Wiederverwendung des Materials zerkleinert werden müssen, weitgehend vermieden wird. Bei einem solchen kontinuierlichen Spritzgußvorgang müssen, um ein einwandfreies Produkt zu erhalten, die Kanäle, Düsen od.dgl., über welche die Schmelze dem Formhohlraum zugeführt wird, so beheizt werden, daß die Schmelze an vorbestimmten Stellen eine bestimmte Temperatur besitzt. Liegt nämlich die Temperatur unterhalb des vorbestimmten Wertes, so weist die Schmelze nicht die zur Erzielung eines einwandfreien Produktes erforderliche Viskosität auf, ist die Temperatur zu hoch, so erfolgt eine Zersetzung der Schmelze, wodurch beispielsweise giftige Bestandteile freigesetzt werden. Um die Temperatur an bestimmten Stellen der Schmelzezuführungsleitungen innerhalb eines vorgegebenen Temperaturintervalles konstant zu halten, hat man bereits vorgeschlagen, dort Temperaturmeßeinrichtungen vorzusehen, wobei die in jeder Temperaturmeßeinrichtung gemessene Temperatur über eine elektrische Leitung zu einer nur dieser Temperaturmeßeinrichtung zugeordneten, gesondert von der Form aufgestellten Regeleinrichtung übertragen wird, von wo über eine weitere Leitung die zugehörige Heizeinrichtung gesteuert wird. Eine solche Anordnung gewährleistet zwar im Normalbetrieb eine Konstanthaltung der Temperaturen an den einzelnen Meßstellen innerhalb eines vorgegebenen Temperaturintervalles, weist jedoch zahlreiche Nachteile auf. So sind, da von jeder Meßeinrichtung eine elektrische Leitung aus der Form zur zugehörigen Regeleinrichtung und von dieser Regeleinrichtung eine weitere elektrische Leitung zur zugehörigen Heiz- oder Kühleinrichtung in der Form geführt werden müssen, außerhalb dieser Form zahlreiche elektrische Leitungen angeordnet, so daß die Gefahr besteht, daß bei der Bedienung bzw. Überwachung des Spritzgußvorganges Leitungen beschädigt bzw. die Anschlußstellen dieser Leitungen unterbrochen werden, wodurch eine einwandfreie Funktion hinsichtlich der Temperaturregelung nicht mehr gegeben ist. Ein weiterer Nachteil dieser bekannten Anordnung besteht darin, daß hiedurch nur eine Konstanthaltung der Temperaturen an den vorbestimmten Meßstellen erfolgt, jedoch zwischen den einzelnen Meßstellen kein Dialog hergestellt ist. So erfolgt beispielsweise dann, wenn sich die Temperatur an einer bestimmten Meßstelle durch äußere Einflüsse ändert, nicht automatisch eine entsprechende Regelung der an benachbarten Meßstellen gemessenen Temperaturen auf einen anderen Wert. Derselbe Nachteil tritt bei einer Änderung der Parameter, beispielsweise der Schmelzetemperatur, auf. Schließlich ist es erforderlich, daß am Beginn des Spritzgußprozesses an den einzelnen Meßstellen eine höhere Temperatur herrscht als nach einer gewissen Anlaufzeit, um die Temperaturerhöhung infolge von Reibung auszugleichen. Die bei diesen Vorgängen notwendigen Temperaturänderungen können bei der bekannten Anordnung nur durch eine Bedienungsperson bewirkt werden, die die Temperaturwerte zusätzlich über Anzeigeinstrumente optisch überwacht. Diese Bedienungsperson, welche in der Regel mehrere Spritzgußeinrichtungen zu betreuen hat, ist häufig überfordert, so daß es infolge von falschen Temperaturen an den einzelnen Meßstellen bzw. Temperaturrelationen zwischen den einzelnen Meßstellen zur Herstellung von Ausschußprodukten kommt und fallweise sogar eine Beschädigung einzelner Teile der Spritzgußeinrichtung erfolgt. Bei auftretenden Fehlern muß bei der bekannten Anordnung die gesamte Anlage stillgesetzt und, in der Regel durch zumindest teilweise Zerlegung der Anlage, der Fehler gesucht und behoben werden.

Es ist Aufgabe der vorliegenden Erfindung, die Nachteile der bekannten Anordnung zu vermeiden und eine Vorrichtung zu schaffen, die eine einheitliche Uberwachung sämtlicher Meßstellen und eine einheitliche Regelung sämtlicher Heiz- und/oder Kühleinrichtungen ermöglicht, wobei auch die gegenseitige Beeinflussung der einzelnen Temperaturwerte berücksichtigt wird. Es ist eine weitere Aufgabe der Erfindung, eine Vorrichtung zu schaffen, bei der die Anbringung zahlreicher, Störungen verursachender elektrischer Leitungen außerhalb der Form nicht mehr erforderlich ist.

Weiters ist es Aufgabe der Erfindung, eine Vorrichtung zu schaffen, mittels welcher eine gemeinsame Regelung aller Regelstellen unter Berücksichtigung der an den Meßstellen gemessenen Temperaturen nach einem vorgegebenen Programm ermöglicht wird, wobei ein Dialog zwischen den einzelnen gemessenen Temperaturen hergestellt wird, so daß auch die gegenseitige Beeinflussung dieser Temperaturen berücksichtigt wird. Weiters soll eine Vorrichtung geschaffen werden, die es ermöglicht, auch Fehler aufzuzeigen, zu lokali-

2

sieren und häufig auch zu beseitigen, ohne daß hiefür ein Zerlegen der Anlage erforderlich ist, sowie unter Umständen bei Auftreten von Fehlern infolge falscher Temperaturen an einzelnen Meßstellen sogar eine selbsttätige Fehlerbeseitigung durchzuführen.

Weiters soll die Auswerteschaltung für Meß- und Regelverfahren bei verschiedenen Anlagen bzw. bei Anlagen, die mit verschiedenen und daher unterschiedliche Temperaturverhältnisse erfordernden Schmelzen gefahren werden, ohne zusätzliche Maßnahmen eingesetzt werden können.

Die erfindungsgemäße Vorrichtung zur Herstellung von Spritzgußteilen, mit einer Form, die Schmelzezuführungsleitungen, wie Kanäle, Düsen od.dgl., aufweist, welche mit Heiz- und/oder Kühleinrichtungen und mit Temperaturmeßeinrichtungen versehen sind, welche Einrichtungen über Regeleinrichtungen zur Steuerung dieser Einrichtungen in Verbindung stehen, ist dadurch gekennzeichnet, daß wenigstens eine Regeleinrichtung unmittelbar an der Form lösbar befestigt ist und mit einem an der Regeleinrichtung angebrachten und an diese Regeleinrichtung elektrisch angeschlossenen ersten Teil einer elektrischen Steckerkupplung versehen ist, welcher erste Teil mit einem unmittelbar an der Form angebrachten zweiten Teil dieser Steckerkupplung kuppelbar ist, wobei am zweiten Teil im Inneren der Form verlegte, zu den Heiz- und/oder Kühleinrichtungen und zu den Temperaturmeßeinrichtungen führende elektrische Leitungen angeschlossen sind. Die lösbare Befestigung der Regeleinrichtung kann beispielsweise durch eine Steckkupplung oder durch Einschub der kassettenartig ausgebildeten Regeleinrichtung in ein vorgesehenes Fach in der Form erfolgen, wobei in jedem Fall bei dieser befestigung über die elektrische Steckerkupplung die Verbindung mit den einzelnen Heiz- und/oder Kühleinrichtungen und mit den einzelnen Temperaturmeßeinrichtungen über die im Inneren der Form verlegten Leitungen erfolgt, so daß hiedurch die Anzahl der außerhalb der Form verlegten Leitungen, welche, wie erwähnt, eine häufige Fehlerquelle sind, weitgehend reduziert werden kann. Außer einer Anspeiseleitung zur Zufuhr der erforderlichen elektrischen Energie zur Regeleinrichtung kann die Regeleinrichtung noch über eine Außenleitung mit einem Dateneingabe- und -an- zeigegerät sowie über eine weitere Außenleitung mit einem Steuergerät zur Regelung des Schmelzenzuflusses zu den Schmelzezuführungsleitungen elektrisch verbunden sein. Die elektrische Verbindung zwischen der Regeleinrichtung und dem Dateneingabe- und -anzeigegerät über eine Außenleitung bringt den Vorteil mit sich, daß dieses Dateneingabe- und -anzeigegerät während des Normalbetriebes von der Regeleinrichtung getrennt werden kann. Dieses Dateneingabe- und -anzeigegerät, welches über eine genormte Schnittstelle an die Regeleinrichtung angeschlossen werden kann, dient einerseits zur Vorprogrammierung der Regeleinrichtung, um optimale Temperaturbedingungen bei allen Betriebsverhältnissen zu erzielen, anderseits zur optischen Anzeige der einzelnen Meßwerte und Betriebsverhältnisse über einen Bildschirm und/oder über Meßinstrumente, beispielsweise um bei Auftreten einer Störung die Fehlerquelle rasch und mit geringem Aufwand feststellen zu können. Derartige auftretende Störungen können, soferne sie nicht von der Regeleinrichtung selbsttätig kompensiert werden, durch ein von der Regeleinrichtung abgegebenes akustisches und/oder optisches Signal angezeigt werden.

Durch die Außenleitung, welche die Regeleinrichtung mit einem Steuergerät zur Regelung des Schmelzenzuflusses verbindet, kann der Schmelzenzufluß unterbrochen bzw. die Anlage stillgesetzt werden, soferne durch die Regeleinrichtung eine Störung erkannt wird, welche bei einem weiteren Betrieb der Anlage eine Beschädigung derselben zur Folge haben könnte.

Es können die zu allen Heiz- und/oder Kühleinrichtungen und die zu allen Temperaturmeßeinrichtungen führenden elektrischen Leitungen über eine elektrische Steckerkupplung mit einer einzigen Regeleinrichtung in Verbindung stehen, welche dann die Regelung der Temperaturverhältnisse in der gesamten Anlage bewirkt. Beispielsweise aus Platzgründen oder aus steuerungstechnischen Gründen kann es jedoch auch zweckmäßig sein, mehrere Regeleinrichtungen an der Form lösbar zu befestigen, von welchen jede eine elektrische Steckerkupplung zum Anschluß an im Inneren der Form verlegte, zu einigen der Heiz- und/oder Kühleinrichtungen und zu einigen der Temperaturmeßeinrichtungen führende elektrische Leitungen und zum Anschluß an im Inneren der Form verlegte, die einzelnen Regeleinrichtungen miteinander verbindende elektrische Leitungen aufweist, wobei bei Anordnung von Außenleitungen zur Verbindung mit einem Dateneingabe- und -anzeigegerät und-/oder mit einem Steuergerät lediglich eine einzige Regeleinrichtung mit solchen Außenleitungen versehen ist. Auch in diesem Falle erfolgt ein Dialog zwischen den Regeleinrichtungen über die im Innneren der Form verlegten, die einzelnen Regeleinrichtungen miteinander verbindenden elektrischen Leitungen, so daß eine Überwachung der Temperaturverhältnisse in der gesamten Anlage bei Berücksichtigung der gegenseitigen Beeinflussung an den einzelnen Meßstellen erfolgt. Außerdem wird dadurch, daß bei Anordnung von Außenleitungen lediglich eine einzige Regeleinrichtung mit solchen Außenleitungen versehen ist, wieder vermieden, daß eine große Anzahl solcher Außenleitungen vorgesehen sein muß.

Einzelne oder alle Regeleinrichtungen können mit einem Speicher für mehrere Programme versehen sein. Dadurch wird der Vorteil erzielt, daß ein und dieselbe Regeleinrichtung ohne irgendwelche zusätzlichen Maßnahmen bei verschiedenen Spritzgußformen bzw. bei verschiedenen Schmelzenzusammensetzungen verwendet werden kann, wobei lediglich das entsprechende Programm ausgewählt werden muß.

Auch das Dateneingabe- und -anzeigegerät ist zweckmäßig mit einem Speicher für mehrere Programme versehen, um dieses Gerät für alle Regelkreise, die zur Erzielung optimaler Bedingungen in Frage kommen, programmieren zu können.

Zum Schutz der Elektronik, vor allem in den Regeleinrichtungen, aber auch im Dateneingabe- und -anzeigegerät, kann eine Sicheheitsschaltung eingebaut sein, die bei Ansteigen der Temperatur über einen vorbestimmten Grenzwert, der für die Elektronik gefährlich werden könnte, einen Alarm auslöst bzw. die Anlage abschaltet.

Kurze Beschreibung der Zeichnungen

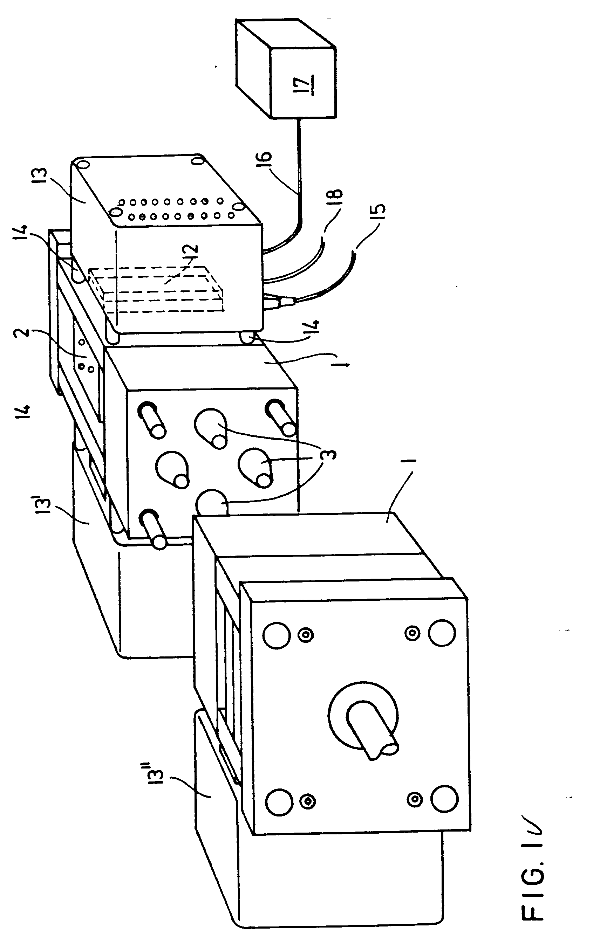

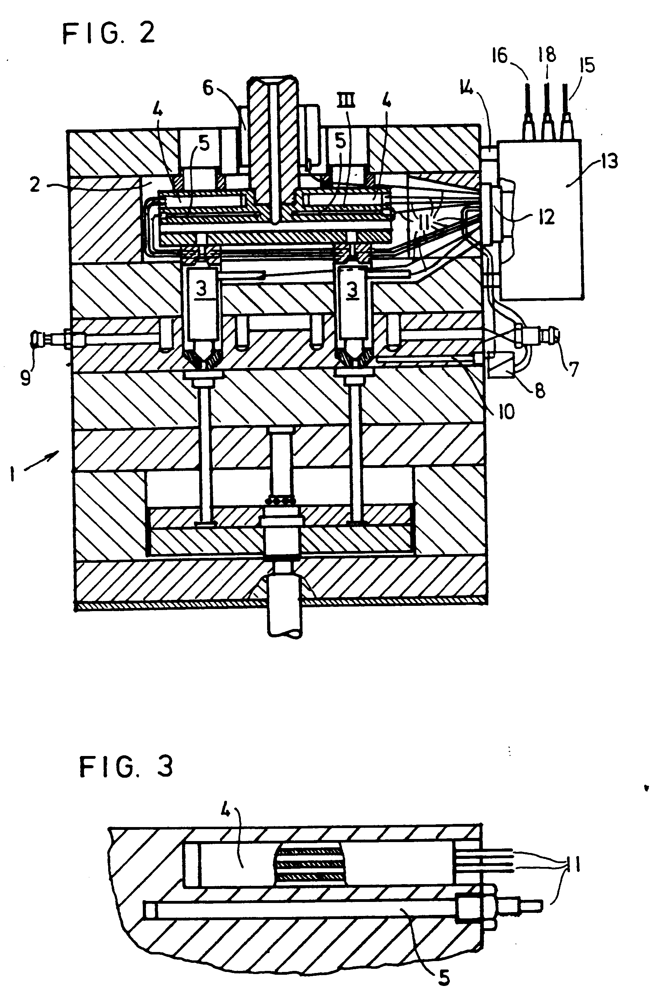

In den Zeichnungen ist die Erfindung an Hand eines Ausführungsbeispieles schematisch veranschaulicht. Fig.1 zeigt in schaubildlicher, auseinandergezogener Darstellung eine erfindungsgemäße Vorrichtung mit mehreren Regeleinrichtungen. Fig.2 stellt die erfindungsgemäße Vorrichtung im Schnitt, jedoch mit lediglich einer einzigen Regeleinrichtung, dar, und Fig.3 zeigt in größerem Maßstab das Detail III in Fig.2.

Detaillierte Beschreibung der Zeichnungen

Die erfindungsgemäße Vorrichtung für die kontinuierliche Herstellung von Spritzgußteilen weist eine, in Fig.1 auseinandergezogen dargestellte, Spritzgußform 1 üblicher Bauart auf. In dieser Spritzgußform 1 befindet sich ein Verteilerkanal 2 für die Schmelze, von welchem die Schmelze über Punktangußdüsen 3 dem Formhohlraum zugeführt wird.

Im Verteilerkanal 2 sind Heizpatronen 4 sowie Temperaturfühler 5 für die Heiztemperatur angeordnet. Eine weitere Erwärmung der Schmelze erfolgt über ein Heizband 6. Schließlich sind auch die Düsen 3 beheizt und mit einem innenliegenden Temperaturfühler versehen.

Fallweise ist auch eine Kühlung der Spritzgußform erforderlich. Eine solche Kühlung erfolgt über ein Kühlmittel, welches über eine Kühlmittelzufuhr 7 und ein Magnetventil 8 zugeführt wird und bei 9 aus der Form austritt. Für die Überwachung der Temperatur des Kühlmittels ist ein Temperaturfühler 10 vorgesehen.

Sämtliche Heizeinrichtungen, also die Heizpatronen 4, das Heizband 6 sowie die Heizeinrichtungen in den Düsen 3, das Magnetventil 8 für die Kühlmittelzufuhr, und die Temperaturfühler 5,10 sowie die im Inneren der Düsen 3 liegenden Temperaturfühler sind über im Inneren der Spritzgußform 1 verlegte elektrische Leitungen 11 mit einer elektrischen Steckerkupplung 12 elektrisch leitend verbunden, über welche der elektrische Anschluß zumindest einer Regeleinrichtung 13 erfolgt. In Fig.2 ist lediglich eine solche Regeleinrichtung 13 dargestellt. Bei der Anordnung nach Fig.1 hingegen sind drei solcher Regeleinrichtungen 13,13',13'' vorgesehen. In diesem Fall ist jede der drei Regeleinrichtungen 13,13',13'' über elektrische Leitungen 11 mittels einer elektrischen Steckerkupplung 12 mit bestimmten Heiz- und/oder Kühleinrichtungen und mit bestimmten Temperaturmeßeinrichtungen verbunden.

Die Regeleinrichtungen 13 bzw.13' bzw.13'' sind über Kupplungselemente 14 mit dem Gehäuse der Spritzgußform 1 mechanisch lösbar verbunden. Diese Kupplungselemente 14 in Verbindung mit der elektrischen Steckerkupplung 12 ermöglichen eine rasche Anbringung der Regeleinrichtungen 13 am Gehäuse der Spritzgußform 1.

Zur Erzielung eines einwandfreien Spritzgußteiles ist es notwendig, daß die Schmelze einerseits eine bestimmte Viskosität aufweist, anderseits nicht auf derart hohe Temperaturen erwärmt wird, daß sie sich zersetzt. Durch die Regeleinrichtungen 13, welche über die elektrischen Leitungen 11 mit den Heizeinrichtungen 3,4,6 und mit der Steuerung der Kühlmittelzufuhr 8 sowie mit den Temperaturmeßeinrichtungen 5,10 verbunden sind, werden nun sämtliche Temperaturen gemessen bzw. erfaßt und die zugehörigen Heiz- bzw. Kühleinrichtungen entsprechend geregelt, wobei die Regeleinrichtungen auch untereinander durch entsprechende elektrische Leitungen in Dialog stehen, so daß eine koordinierte Steuerung der Heiz- und Kühleinrichtungen erfolgt. Wie bereits erwähnt, ist es im Prinzip möglich, die Anzahl der verwendeten Regeleinrichtungen 13 zu variieren. Insbesondere ist es, wie auch das Ausführungsbeispiel nach Fig.2 zeigt, möglich, mit einer einzigen Regeleinrichtung 13 das Auslangen zu finden, in welchem Fall dann die im Inneren der Spritzgußform 1 vorgesehenen elektrischen Verbindungsleitungen für die Verbindung zwischen den einzelnen Regeleinrichtungen entfallen.

Zumindest eine der Regeleinrichtungen 13 weist eine Anschlußleitung 15 für die Zufuhr der zum Betrieb erforderlichen elektrischen Energie auf. Ferner ist wenigstens eine der Regeleinrichtungen 13 über eine Außenleitung 16 mit einem lediglich schematisch dargestellten Dateneingabe- und -anzeigegerät 17 elektrisch verbunden, und über eine weitere Außenleitung 18 mit einem nicht dargestellten Steuergerät, über das beispielsweise der Schmelzenfluß zum Verteilerkanal 2 unterbunden oder die Anlage vollständig abgeschaltet wird, wenn ein Fehler auftritt, der eine Beschädigung der Anlage zur Folge haben könnte. Sowohl die Regeleinrichtungen 13,13',13" als auch das Dateneingabe- und -anzeigegerät 17 ist zweckmäßig mit einem Speicher für mehrere Programme versehen.

Durch die gesonderte Anordnung des Dateneingabe- und -anzeigegerätes 17 wird ermöglicht, jene Schaltelemente, die für die Dateneingabe an die Regeleinrichtung 13 benötigt werden und die für eine Datenanzeige benötigt werden, von der Regeleinrichtung zu trennen, wenn die Programmierung der Regeleinrichtung 13 erfolgt ist und wenn, beispielsweise während des vollautomatischen Betriebes, eine Datenanzeige nicht erforderlich ist.

Die Regeleinrichtungen bestehen beispielsweise aus einem Mikroprozessor mit einem analogen Teil und einem digitalen Teil, der mehrere analoge Regler beeinflußt und überwacht. Das Dateneingabe- und -anzeigegerät 17 korrespondiert über eine genormte Schnittstelle mit dem digitalen Teil. Über dieses Dateneingabe- und -anzeigegerät 17, welches im Normalbetrieb nicht angeschlossen ist, erfolgt einerseits eine Programmierung der Regeleinrichtung bzw. Regeleinrichtungen zur Erzielung optimaler Betriebsbedingungen, anderseits kann bei Auftreten einer Fehleranzeige in einer Regeleinrichtung die Fehlerursache durch Anschluß dieses Gerätes an diesem Gerät festgestellt werden und es können die Betriebsbedingungen optisch überwacht werden. Eine solche Fehleranzeige wird durch eine Regeleinrichtung 13 beispielsweise mittels eines optischen Signales abgegeben, wenn ein Fehler auftritt, der durch die Regeleinrichtungen nicht selbsttätig behoben werden kann und bei dem die Anlage oder einzelne Teile derselben Schaden leiden könnten. Das dann angeschlossene Dateneingabe- und -anzeigegerät 17 ermöglicht in der Regel auch eine Fehlerdiagnose ohne einen Ausbau einzelner Teile der Anlage, fallweise sogar ohne die Anlage stillsetzen zu müssen.

Zweckmäßig sind die Regeleinrichtungen 13,13',13" als Normteile mit gleichfalls genormten Anschlüssen ausgebildet, so daß sie bei verschiedenen Einrichtungen eingesetzt werden können.

Die erfindungsgemäße Vorrichtung ermöglicht nicht nur die Regelung von Heizeinrichtungen, sondern auch die Regelung von Kühleinrichtungen, wofür bisher besondere Geräte erforderlich waren.

## Patentansprüche

1. Vorrichtung zur Herstellung von Spritzgußteilen, mit einer Form (1), die Schmelzezuführungsleitungen, wie Kanäle (2), Düsen (3) od.dgl. aufweist, welche mit Heiz- und/oder Kühleinrichtungen (4,6; 7,8,9) und mit Temperaturmeßeinrichtungen (5,10) versehen sind, welche Einrichtungen über Regeleinrichtungen (13,13',13") zur Steuerung dieser Einrichtungen in Verbindung stehen, dadurch gekennzeichnet, daß wenigstens eine Regeleinrichtung (13,13',13") unmittelbar an der Form (1) lösbar befestigt ist und mit einem an der Regeleinrichtung (13,13',13") angebrachten und an diese Regeleinrichtung elektrisch angeschlossenen ersten Teil einer elektrischen Steckerkupplung (12) versehen ist, welcher erste Teil mit einem unmittelbar an der Form (1) angebrachten zweiten Teil dieser Steckerkupplung (12) kuppelbar ist, wobei am zweiten Teil im Inneren der Form (1) verlegte, zu den Heiz- und/oder Kühleinrichtungen (4,6; 7,8,9) und zu den Temperaturmeßeinrichtungen (5,10) führende elektrische Leitungen angeschlossen sind.

2. Vorrichtung nach Anspruch 1, dadurch gekennzeichnet, daß die Regeleinrichtung (13) über eine Außenleitung (16) mit einem Dateneingabe- und -anzeigegerät (17) elektrisch verbunden ist.

3. Vorrichtung nach Anspruch 1, dadurch gekennzeichnet, daß die Regeleinrichtung (13) über eine Außenleitung (18) mit einem Steuergerät zur Regelung des Schmelzenzuflusses zu den Schmelzezuführungsleitungen elektrisch verbunden ist.

4. Vorrichtung nach Anspruch 1, dadurch gekennzeichnet, daß die zu allen Heiz- und/oder Kühleinrichtungen (4,6; 7,8,9) und die zu allen Temperaturmeßeinrichtungen (5,10) führenden elektrischen Leitungen (11) über eine elektrische Steckerkupplung (12) mit einer einzigen Regeleinrichtung (13) in Verbindung stehen.

5. Vorrichtung nach einem der Ansprüche 1 bis 4, dadurch gekennzeichnet, daß mehrere Regeleinrichtungen (13,13',13") an der Form (1) lösbar befestigt sind, von welchen jede eine elektrische Steckerkupplung (12) zum Anschluß an im Inneren der Form (1) verlegte, zu einigen der Heiz- und/oder Kühleinrichtungen und zu einigen der Temperaturmeßeinrichtungen führende elektrische Leitungen (11) und zum Anschluß an im Inneren der Form verlegte, die einzelnen Regeleinrichtungen (13,13',13") miteinander verbindende elektrische Leitungen aufweist, wobei bei Anordnung von Außenleitungen (16,18) zur Verbindung mit einem Dateneingabe- und -anzeigegerät (17) und/oder mit einem Steuergerät lediglich eine einzige Regeleinrichtung (13) mit solchen Außenleitungen versehen ist.

6. Vorrichtung nach einem der Ansprüche 1 bis 5, dadurch gekennzeichnet, daß die Regeleinrichtung(en) (13,13',13") mit einem Speicher für mehrere Programme versehen ist bzw. sind.

7. Vorrichtung nach Anspruch 2 oder 5, dadurch gekennzeichnet, daß das Dateneingabe- und -anzeigegerät (17) mit einem Speicher für mehrere Programme versehen ist.

## Claims

1. A device for manufacturing injection moldings with a mold (1) having melt feed pipes such as channels (2), nozzles (3) or the like provided with heating and/or cooling means (4,6; 7,8,9) and with temperature measuring means (5,10), which means are connected via regulating means (13, 13′, 13″) for controlling these means, characterized in that at least one regulating means (13, 13′, 13″) is directly and releasably attached to the mold (1) and provided with the first part of an electric plug coupling electrically connected to said regulating means, which first part is suitable for coupling with a second part of said plug coupling (12) directly attached to the mold (1), electric conduits leading to the heating and/or cooling means (4,6; 7,8,9) and to the temperature measuring means (5,10) being disposed in the interior of the mold (1) on the second part.

2. The device according to claim 1, wherein the regulating means (13) is electrically connected to a data entry and display device (17) via an external line (16).

3. The device according to claim 1, wherein the regulating means (13) is electrically connected to a control means for regulating the melt feed flow to the melt feed lines via an external line (18).

4. The device according to claim 1, wherein the electric conduits (11) leading to all the heating and cooling means (4,6; 7,8,9) and to all the temperature measuring means (5,10) are connected to a single regulating means (13) via an electric plug coupling.

5. The device according to any one of the claims 1 to 4, wherein a plurality of regulating means (13,13′, 13″) is releasably connected to the mold (1), each one of them having an electric plug coupling (12) for connecting to electric conduits (11) disposed in the interior of the mold (1) and leading to some of the heating and/or cooling means and to some of the temperature measuring means and for connecting to electric conduits disposed in the interior of the mold and connecting the individual regulating means (13, 13′, 13″) to one another, one single regulating means (13) being provided if external lines (16,18) for the connection to a data entry and display device (17) and/or a control means are provided.

6. The device according to any one of the claims 1 to 5, wherein the regulating means (13, 13′, 13″) is (are) provided with a memory for a plurality of programs.

7. The device according to claim 2 or claim 5, wherein the data entry and display device (17) is provided with a memory for a plurality of programs.

## Revendications

1. Dispositif pour fabriquer des pièces moulées par injection, avec un moule (1) pourvu de conduites d'amenée de matière en fusion comme des canaux (2), des buses (3), etc., pourvues de moyens de chauffage et/ou frigorifiques (4,6; 7,8,9) et de moyens (5,10) pour mesurer la température, lesdits moyens étant reliés par l'intermédiaire de moyens de réglage (13, 13′, 13″) pour contrôler les moyens suscités, caractérisé en ce qu'au moins un des moyens de réglage (13, 13′, 13″) est directement attaché au moule de manière amovible et pourvu d'une première partie d'une prise d'accouplement (12) fixée au moyen de réglage (13, 13′, 13″) et électriquement reliée audit moyen de réglage, ladite première partie étant couplable avec une deuxième partie de ladite prise d'accouplement (12) directement attachée au moule (1), des lignes électriques menant aux moyens de chauffage et/ou frigorifiques (4,6; 7,8,9) et aux moyens pour mesurer la température (5,10) disposées à l'intérieur du moule étant reliées à la deuxième partie.

2. Dispositif selon la revendication 1, caractérisé en ce que le moyen de réglage (13) est électriquement relié à un moyen d'introduction et d'affichage des données (17) par l'intermédiaire d'une ligne externe (16).

3. Dispositif selon la revendication 1, caractérisé en ce que le moyen de réglage est électriquement relié à un moyen de contrôle pour le réglage de l'amenée de matière en fusion aux conduites d'amenée de matière en fusion par l'intermédiare d'une ligne externe (18).

4. Dispositif selon la revendication 1, caractérisé en ce que les lignes électriques (11) menant à tous les moyens de chauffage et/ou frigorifiques (4,6; 7,8,9) et à tous les moyens pour mesurer la température (5,10) sont reliées à un seul moyen de réglage (13) par l'intermédiare d'un moyen d'accouplement électrique (12).

5. Dispositif selon une des revendications 1 à 4, caractérisé en ce que plusieurs moyens de réglage (13, 13′, 13″) sont attachés au moule (1) de manière amovible, chacun desdits moyens de réglage étant pourvu d'une prise d'accouplement (12) pour la connexion à des lignes électriques (11) disposées à l'intérieur du moule (1) à un nombre des moyens de chauffage et/ou frigorifiques et à un nombre des moyens pour mesurer la température et pour la connexion aux lignes électriques disposées à l'intérieur du moule et mutuellement reliant les moyens de réglage (13, 13′, 13″), un seul moyen de réglage (13) étant pourvu de lignes extérieures si des lignes extérieures (16, 18) sont pourvues pour la connexion à un moyen d'introduction et d'affichage des données (17) et/ou un moyen de contrôle.

6. Dispositif selon une des revendications 1 à 5, caractérisé en ce que le(s) moyen(s) de réglage (13, 13′, 13″) est (sont) relié(s) à une mémoire pour plusieurs programmes.

7. Dispositif selon la revendication 2 ou la revendication 5, caractérisé en ce que le moyen d'introduction et d'affichage des données (17) est relié à une mémoire pour plusieurs programmes.

FIG. 1

EP 0 287 597 B1

FIG. 2

FIG. 3